(19) Europäisches Patentamt
European Patent Office
Office européen des brevets

(11) Veröffentlichungsnummer : **0 180 129**
**B1**

(12) # EUROPÄISCHE PATENTSCHRIFT

(45) Veröffentlichungstag der Patentschrift : **28.09.88**

(51) Int. Cl.$^4$ : **C 09 D 3/48**, C 09 D 7/12, C 08 J 7/04

(21) Anmeldenummer : **85113391.8**

(22) Anmeldetag : **22.10.85**

(54) **Verfahren zur Beschichtung von Substraten mit kratzfesten, nichtreflektierenden Überzügen.**

(30) Priorität : **27.10.84 DE 3439482**

(43) Veröffentlichungstag der Anmeldung : **07.05.86 Patentblatt 86/19**

(45) Bekanntmachung des Hinweises auf die Patenterteilung : **28.09.88 Patentblatt 88/39**

(84) Benannte Vertragsstaaten : **BE FR GB IT NL SE**

(56) Entgegenhaltungen :
**EP-A- 0 038 640**
**DE-A- 2 732 753**
**US-A- 3 986 997**

(73) Patentinhaber : **Röhm GmbH**
**Kirschenallee Postfach 4242**
**D-6100 Darmstadt 1 (DE)**

(72) Erfinder : **Hohage, Heinz-Jürgen, Dr.**
**In der Wildnis 3**
**D-6109 Mühltal (DE)**
Erfinder : **Neeb, Rolf**
**An der Römerstrasse 12**
**D-6102 Pfungstadt (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 180 129 B1

Jouve, 18, rue St-Denis, 75001 Paris, France

**Beschreibung**

Gebiet der Erfindung

Die Erfindung betrifft ein Verfahren zur Beschichtung von Substraten insbesondere Kunststoffen, speziell transparenten Kunststoffen mit kratzfesten Überzügen, die auftreffendes Licht nicht oder nur in geringem Maße reflektieren.

Stand der Technik

Die Technik hat eine Reihe von Werkstoffen entwickelt, die den gestellten Anforderungen im großen und ganzen gerecht werden bis auf eine ungenügende Oberflächenhärte bzw. Kratzfestigkeit. Naturgemäß erreichen Kunststoffe nicht die Oberflächenhärte und Kratzfestigkeit der meisten Metalle oder der Mineralgläser. Besonders nachteilig macht sich die Anfälligkeit gegenüber Verkratzen und — in der Folge Rißbildung bei transparenten Kunststoffen bemerkbar.

Es hat daher nicht an Bemühungen gefehlt, die Oberfläche von Kunststoffen kratzfest auszurüsten. Die dazu vorgeschlagenen Verfahren und Verfahrensvarianten lassen sich bereits nur mehr schwer überschauen. Als Beschichtungsmaterialien sind — je nach Kompatibilität bevorzugt härtbare Kunststoffharze vorgeschlagen worden. Genannt seien beispielsweise Beschichtungen mit Polyvinylaldehyden oder Polyvinylestern mit einem Dialdehyd (z. B. US-PS-3 484 157), Polyurethanen (z. B. DE-OS-26 11 782), mit Alkyltitanat (z. B. US-PS-3 700 487), oder Melamin in den verschiedensten Variationen, auch mit Melamin-Polyol (z. B. GB-PS-1 308 697, US-PS-3 862 261).

Weiter sind Acrylharze der verschiedensten Arten (z. B. DE-OS-23 17 874), fluorierte Kohlenwasserstoffe in den verschiedensten Kombinationen und Modifikationen (NL-OS-6608 316, DE-OS-19 63 278, DE-OS-24 54 076) vernetzte Polyalkyleniminverbindungen (US-PS-3 766 299) und Siliciumverbindungen, insbesondere Silikonharze (z. B. BE-PS-821 403, US-PS 3 451 838, US-PS-3 707 397) zur Beschichtung herangezogen worden.

Zu der oben aufgeführten Aufgabe, Oberflächen, insbesondere von transparenten Kunststoffen kratzfest auszurüsten, tritt in manchen Fällen eine weitere hinzu, nämlich die Ausrüstung von Kunststoffen mit Beschichtungen, die auftreffendes Licht praktisch überhaupt nicht bzw. in stark reduziertem Maße reflektieren (« Antireflex-Beschichtung »).

Es lag auf der Hand, zu versuchen, durch Beschichtung der Oberflächen Kratzfestigkeit und Antireflexwirkung herzustellen. Die als Substrate für Beschichtungen infrage kommenden Kunststoffe umfassen so ziemlich alle Typen, insbesondere die transparenten Kunststoffe. Genannt seien Acrylharze, insbesondere auf Basis Polymethylmethacrylat, Polycarbonat, Polystyrol, Polyvinyltoluol und andere Vinylharze, Methylpenten-Polymerisate (TPX), Polysulfone, Cellulosederivate, fluorierte Polymere, Polyurethane, Silikone.

Schon relativ früh verwendete man u. a. kolloidales Siliciumdioxid in Form eines Sol in Wasser oder anderen geeigneten Lösungsmitteln wie Ethylenglykolmonoethylether oder einem Gemisch von Lösungsmitteln. (US-PS-2 432 484). Die Teilchengröße liegt bei kolloidalen Systemen zwangsläufig im $m\mu$-Bereich. Um die Beschichtung abriebfester, weniger empfindlich gegen Berührung zu machen, kann eine zweite Beschichtung als Binder auf das kolloidale Material aufgebracht werden. Als Binder wird eine verdünnte Lösung von Tetraethylorthosilikat in einem organischen Lösungsmittel wie mit Essigester denaturiertem Alkohol mit einem geringen HCl-Gehalt angewendet.

Im US-A-3 986 997 werden pigmentfreie wäßrige Überzugsmittel auf der Basis von Silanolkondensat und Siliciumdioxid bestehend aus einer Dispersion von kolloidalem $SiO_2$ in einer Lösung eines Teilkondensats eines Alkylsilanols beschrieben. Dabei soll der $SiO_2$-Gehalt 10-70 Gew.-% des Feststoffgehaltes betragen.

Ähnlich werden auch in der DE-A-28 11 072 Beschichtungsmassen mit 30-50 Gew.-% kolloidaler Kieselsäure und 50-70 Gew.-% Siloxan beschrieben.

Eine Beschichtungsmasse aus partiell hydrolysiertem Ethylorthosilikat, Polyvinylacetat, Polyvinylformal, Siliciumdioxid und Methylmethacrylat in alkalischer Lösung ist in der US-A-3 324 055 beschrieben.

In der JP-A-74 31 767 (Chem. Abstr. 81, 154 763) wird auf ein Substrat ein $SiO_2$-Film im Vakuum aufgebracht, mit Wasserdampf behandelt und anschließend mit fluoriertem Alkylsiloxan beschichtet.

In der DE-A-27 28 127 wird ein Antireflexbelag für ein Kunststoffsubstrat z. B. Polycarbonat vorgeschlagen, bestehend aus einer ersten Schicht aus Siliciumdioxid, das auf das Substrat in 1-5 Mikrometer Dicke aufgedampft wurde, einer zweiten Schicht aus Aluminiumoxid, das auf die erste Schicht in einer optischen Dicke von $\lambda/4$ aufgedampft wurde und einer dritten Schicht aus Siliciumdioxid oder Magnesiumfluorid, das auf die zweite Schicht in einer optischen Dicke von $\lambda/4$ aufgedampft ist.

Die JP-A-55 052 001 (Chem. Abstr. 93, 172 530) schlägt Antireflexionsfilme für optische Teile aus transparentem Syntheseharz (z. B. aus Polycarbonat oder Polymethylmethacrylat) vor, die aus Siliciumoxid oder Zirkonoxid bestehen. Aus der JP-A-58 42 001 (Chem. Abstr. 99, 55 165 g) ist ebenfalls eine Antireflex-Beschichtung für optische Elemente aus Kunststoffen bekannt. Dabei wird zunächst auf der

Oberfläche der optischen Elemente eine Schicht aus einem Kondensat aus teilhydrolysiertem Alkyltrialkoxysilan aufgebracht. Auf diese Schicht wird dann mittels Vakuumbedampfung mindestens eine Schicht von λ/2 oder λ/4 aus Siliciumoxid, Aluminiumoxid, Ceroxid und/oder Thoriumoxid aufgebracht (λ = 400-700 nm).

Die Antireflex-Beschichtung von Kunststoff-Linsen ist Gegenstand der JP-A-58 60 701 (Chem. Abstr. 99, 123 818 z). Dabei wird die Linsenoberfläche im Vakuum mehrfach mit Siliciumoxid so beschichtet, daß Schichten mit unterschiedlichem Brechungsindex entstehen.

Leichte Linsen mit hohem Brechungsindex, geringer Reflektivität und hoher Kratzfestigkeit werden nach der JP-A-58 21 701 (Chem. Abstr. 99, 39 517 t) hergestellt, indem man Formkörper aus speziellen Polymeren mit Brechungsindex $n_D^{20}$ = 1,55-1,65 zunächst mit einer Melaminharzschicht versieht und darauf einen Oberflächenfilm aus Siliciumdioxid, Zirkondioxid, Yttriumoxid, Yterbiumoxid, Aluminiumoxid oder anderen anorganischen Verbindungen aufbringt.

Mattierte Beschichtungen von Kunststoffen mit hoher Kratzfestigkeit sind Gegenstand der JP-A-80 12 107 (Chem. Abstr. 93, 9 663 w).

Das Beschichtungsmittel besteht aus Silikon, Siliciumdioxid und Polyvinylbutyral. Siliciumdioxid und Silikon sollen dabei im Verhältnis 0,1-2 und die Siliciumverbindungen wiederum zum Polyvinylbutyral im Verhältnis 0,005-0,05 stehen. Damit beschichtetes Polymethylmethacrylat ist halbdurchsichtig. Beschriftung mit Markierstiften läßt sich durch Abreiben leicht entfernen.

Aufgabe

Die Anwendung der Beschichtungsmittel des Standes der Technik konnte nicht immer befriedigen. Es fehlt beispielsweise an Beschichtungen, insbesondere für Kunststoffe, die genügende Kratzfestigkeit und reflexionshindernde bzw. -mindernde Wirkung gegenüber auffallendem Licht besitzen, selbstverständlich ohne die Qualitäten der Kunststoffe zu beeinträchtigen. Das Aufdampfen von Oxiden wie Siliciumdioxid, Aluminiumoxid usw. im Vakuum, zum Teil in mehrfach wiederholten Arbeitsgängen, muß als ein relativ aufwendiges Verfahren betrachtet werden. Beim Aufbringen von Kieselsäure in kolloidaler Verteilung erhält man in der Regel glasklare Überzüge, d. h. keine reflexionshindernde Wirkung.

Es bestand daher das Bedürfnis nach einem wenig aufwendigen Verfahren zur Beschichtung von Substraten mit kratzfesten, nichtreflektierenden Überzügen, möglichst unter Verwendung an sich bekannter Kratzfestbeschichtungsmittel unter Verwertung der bestehenden technologischen Erfahrungen bei der Herstellung der Mittel und bei deren Applikation.

Lösung

Es wurde nun ein Verfahren zur Beschichtung von Kunststoffen als Substraten mit Beschichtungsmitteln mit Kratzfest- und Antireflexwirkung gefunden, das die Forderungen der Technik weitgehend erfüllt, wobei

a) die Beschichtungsmittel ausgewählt sind aus der Gruppe mit einer Brechungszahl, die um mindestens 0,01 Einheiten vom Wert 1,45 abweicht, bestehend aus

α) Acrylat- und Methacrylatpolymeren, mit gegebenenfalls einem Gehalt an Silicium-organischen Polymerisaten

β) Siliciumorganischen Polymerisaten

γ) Melaminharzen

b) die Beschichtungsmittel einen Gehalt an Siliciumdioxid zwischen 0,1 und 10 Gew.-% besitzen,

c) das Siliciumdioxid eine amorphe, poröse Kieselsäure mit großem Porenvolumen mit oder ohne behandelte Oberfläche bestehend aus Primärteilchen mit einem mittleren Durchmesser im Bereich von 1 bis 50 µ, einem Porenvolumen von 0,1 bis 5 ml/g und einer Stampfdichte (nach DIN 53 194) im Bereich 120-350 g/l, darstellt

d) die Beschichtung der Substrate mit einer Schichtdicke der Beschichtungsmittel im Bereich von 1 bis 40 µ durchgeführt wird.

Bei dem erfindungsgemäßen Verfahren besitzt das Siliciumdioxid vorzugsweise eine spezifische Oberfläche im Bereich 90-900 m²/g. Bei der erfindungsgemäß zu verwendenden Kieselsäure handelt es sich um amorphe, poröse Kieselsäuren, z. B. Fällungskieselsäuren, d. h. Kieselsäuren, die auf naßchemischem Weg, also durch Fällung, hergestellt werden. Solche Fällungskieselsäuren können z. B. durch Umsetzung einer wäßrigen Alkalisilikat-Lösung mit Mineralsäuren hergestellt werden. (Vgl. Ullmanns Encyklopädie der technischen Chemie, 4. Auflage, Bd. 21, S. 465-470, Verlag Chemie).

Dabei haben die Primärteilchen der Kieselsäure im allgemeinen eine durchschnittliche Teilchengröße im Bereich 1 bis 20 µ. Vorzugsweise besitzt die Kieselsäure eine spezifische Oberfläche im Bereich 300-900 m²/g. Im Unterschied zum Stand der Technik wird demnach erfindungsgemäß nicht von Kieselsäure in kolloidaler Form Gebrauch gemacht. Vorzugsweise werden die Kieselsäurepartikel vor dem Eintragen in das Beschichtungsmittel selbst organisch beschichtet. In gewissen Fällen ist es vorteilhaft, zunächst aus dem Beschichtungsmittel und der Kieselsäure eine Paste herzustellen, die dann später bei der Anwendung in die anwendungstechnisch bevorzugte Form gebracht wird, z. B. durch Verdünnen mit einem geeigneten inerten Lösungsmittel in eine spritzfähige Form. Bei den Beschichtungsmitteln

gemäß :

α) Acrylat- und Methacrylatpolymeren handelt es sich vorzugsweise um UV-härtbare, vernetzende Monomere enthaltende Polymerisate.

Die vernetzenden Monomeren besitzen wie üblich mindestens zwei polymerisationsfähige Einheiten z. B. Vinylgruppen pro Molekül. (Vgl. Brandrup-Immergut, Polymer Handbook). Genannt seien z. B. die Diester und höheren Ester der Acryl- bzw. Methacrylsäure von mehrwertigen Alkoholen wie Glykol, Glycerin, Trimethylolethan, Trimethylolpropan, Pentaerythrit, Diglyzerin, Ditrimethylolpropan, Ditrimethylolethan, Dipentaerythrit. Trimethylhexandiol-1,6, Cyclohexandiol-1,4.

Beispiele für derartige vernetzende Monomere sind u. a. Methylendiacrylat und -methacrylat, Äthylenglykoldiacrylat, Äthylenglykoldimethacrylat, Propylenglykoldiacrylat, Propylenglykoldimethacrylat, 1,3-Butandioldiacrylat, 1,3-Butandioldimethacrylat, 1,4-Butandioldiacrylat, 1,4-Butandioldimethacrylat, Neopentylglykoldiacrylat, Neopentylglykoldimethacrylat, Diäthylenglykoldiacrylat, Diäthylenglykoldimethacrylat. 4-Thia-heptandiol-2,6-diacrylat und -methacrylat. Tetramethylenglykoldiacrylat. Tetramethylenglykoldimethacrylat, Pentandioldiacrylat. Pentandioldimethacrylat und Hexandioldiacrylat bzw. Hexandioldimethacrylat, Ditrimethylolpropantetraacrylat und -methacrylat, Dipentaerythrithexaacrylat und -methacrylat.

Die besonders interessanten Acrylat- und Methacrylatpolymeren enthalten vorzugsweise (Meth)acrylsäureester der mehrwertigen Alkohole der Formel I

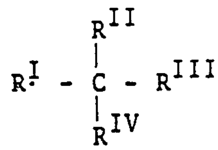

(I)

worin $R^I$, $R^{II}$, $R^{III}$ und $R^{IV}$ für Wasserstoff, Methyl, Ethyl, —OH, —$CH_2OH$, —$C_2H_5OH$ stehen, mit der Maßgabe, daß mindestens zwei —OH-Gruppen gleichzeitig im Molekül vorhanden sein sollen (jedoch nicht am gleichen Kohlenstoffatom) sowie solcher Alkohole, die durch Wasserabspaltung aus den Alkoholen der Formel I hervorgegangen sind,

im allgemeinen in Anteilen von 40-100 Gew.-%, vorzugsweise 80 bis 100 Gew.-%, bezogen auf die Acrylat- bzw. Methacrylatpolymeren sowie Acryl- und Methacrylsäureester der Formel II

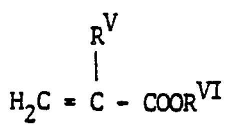

(II)

worin $R^V$ für Wasserstoff oder Methyl und

$R^{VI}$ für einen aliphatischen, gegebenenfalls epoxygruppenhaltigen, einen alicyclischen oder araliphatischen Alkohol mit 1-10, vorzugsweise 1-6 Kohlenstoffatomen im Molekül stehen, im allgemeinen in Anteilen von 0-60 Gew.-%, vorzugsweise 0-20 Gew.-%, bezogen auf die Acrylat- bzw. Methacrylatpolymeren.

Entsprechende Polymerisate sind in der DE-PS-21 64 716 beschrieben. Das Beschichtungsmittel besteht aus einem Homo- oder Mischpolymerisat, das in einpolymerisierter Form mindestens 40 Gew.-% Einheiten wenigstens eines Esters mit insgesamt mindestens 3 Acryloxy- oder Methacryloxyresten pro Molekül von Trimethylolethan, Trimethylolpropan, Pentaerythrit oder Dipentaerythrit und höchstens 60 Gew.-% Einheiten von damit mischpolymerisierbaren einfach oder zweifach ethylenisch ungesättigten Monomeren enthält.

Die Beschichtungsmittel im Rahmen der Lehre der DE-PS-21 64 716 können somit für das erfindungsgemäße Verfahren eingesetzt werden. Brauchbar im Sinne der vorliegenden Erfindung sind auch die Beschichtungsmittel gemäß US-PS-3 097 106, US-PS-2 997 745 und US-PS-2 320 536 sowie JA-AS-17 847/60 und JA-AS-10 676/71, JA-OS-147 675/77 (Chem. Abstr. 88, 172 014 r). JA-OS-25 354/78 (Chem. Abstr. 89, 148 289). DE-OS-28 07 605. JP-PS-78 102 936 (Chem. Abstr. 90, 24 897 g).

Ferner können polyfunktionelle Verbindungen gemäß DE-OS-24 55 715, die wenigstens zu 30 Gew.-% aus wenigstens einer polyfunktionellen Verbindung, wie einer Polymethacryloxyverbindung mit wenigstens drei Methacryloyloxygruppen in einem Molekül und mit einem Molekulargewicht von 250 bis 800 und/oder einer Polyacryloyloxyverbindung mit wenigstens drei Acryloyloxygruppen in einem Molekül und mit einem Molekulargewicht von 250 bis 800 und einem fluorhaltigen oberflächenaktiven Mittel besteht, im Sinne der vorliegenden Erfindung gemäß α) verwendet werden.

Als radikalisch polymerisierbare Monomere neben den genannten Vernetzern kommen z. B. Acrylate bzw. Methacrylate mit 1 bis 10 Kohlenstoffatomen, wie z. B. Methylacrylat, Methylmethacrylat, Äthylacrylat, Äthylmethacrylat, Butylacrylat, Butylmethacrylat, Propylacrylat, Propylmethacrylat, 2-Äthylhexylacrylat, 2-Äthylhexylmethacrylat, Hexylacrylat, Hexylmethacrylat, Cyclohexylacrylat, Cyclohexylmethacrylat, Benzylacrylat, Benzylmethacrylat und Glycidylacrylat bzw. Glycidylmethacrylat, sowie Acryl- und Methacrylsäuren, inftage.

Die Beschichtungsmittel gemäß α) besitzen (vor der Vernetzung) vorzugsweise ein Molekulargewicht im Bereich 250-800. Die Acrylat- und Methacrylatpolymeren gemäß α) können noch zusätzlich Polymerisate anderen Typs. z. B. der unter β) -γ) genannten Arten enthalten.

Herstellung der UV-härtbaren Lacke und Härtung

Man stellt vorzugsweise eine Mischung aus den härtbaren Monomeren her und fügt gegebenenfalls die nicht-polyfunktionellen Monomerverbindungen (Formel II) zu, die u. a. zur Einstellung einer für die Verarbeitung geeigneten Viskosität dienen. Die Viskosität der Mischungen darf nicht so hoch sein, daß sich die Massen nicht innerhalb der bei der industriellen Verarbeitung gebotenen Taktzeiten, d. h. im Bereich von Minuten auf den Oberflächen verteilen lassen. Dieses Kriterium gilt insbesondere beim Auftrag durch Rakel, beim Pinselauftrag usw. In diesen Fällen liegt die Viskosität vorteilhaft bei 100-3 000 mPa · s.

Andererseits sollte die Viskosität nicht so niedrig, sein, daß beim Auftrag durch Tauchen bzw. Sprühen bestimmte Schichtdicken nicht herstellbar sind. Bei diesem Auftragsverfahren ist die Viskosität vorteilhafterweise um ca. einen Faktor 10 geringer als beim Rakelauftrag.

Weiter gibt man zu den Monomeren einen geeigneten Härter, sofern die Härtung als UV-Härtung durchgeführt wird.

Als Härter eignen sich die an sich bekannten, insbesondere UV-anregbare aromatische Verbindungen, beispielsweise Ketoverbindungen wie Benzoinisopropyläther, das Kondensationsprodukt aus Aceton und Benzaldehyd, Benzildialkylketale u. ä.

Die Härtermengen liegen gewöhnlich im Bereich von 1-10 Gew.-% bezogen auf die Monomeren.

Die Einbringung der Kieselsäure und die Beschichtung der Substrate wird die unten (s. « Einbringen des Siliciumdioxis in die Beschichtungsmittel ») beschrieben, vorgenommen.

Als UV-Quelle kommen üblicherweise Quecksilberdampflampen (Hoch- oder Mitteldruck) mit Quarz oder Vicor-Fenster zur Anwendung. Die normalerweise angewandte Energie liegt bei 40-160 W/cm arc. Haupbanden liegen bei 365, 404, 436, 546 und 578 nm. Im allgemeinen genügt die Energiezufuhr im Sekundenbereich, vorzugsweise zwischen 1 und 10 Sec., zu einer ausreichenden Härtung. Als Anhalt kann ein Abstand von 10 cm angenommen werden. (Zur Durchführung der Härtung : vgl. Kirk-Othmer, Vol. XIX, pg 607-624, J. Wiley 1982) Außer der UV-Härtung bietet sich auch eine klassische, radikalinduzierte Härtung an. In diesem Falle setzt man anstelle des oben erwähnten UV-Härters an sich bekannte peroxidische bzw. Azo-Initiatoren ein, beispielsweise Azoisobutyronitril, Dibenzoylperoxid, Dilauroylperoxid (vgl. H. Rauch-Puntigam, Th. Völker, Acryl- und Methacrylverbindungen, Pg. 160-165, Springer-Verlag, 1967). Der Gehalt an den bekannten peroxidischen bzw. Azoinitiatoren liegt bei 0,02 bis 5 Gew.-% bezogen auf die Monomeren.

Auch hier liegen die Aushärtungszeiten im Sekundenbereich, beispielsweise zwischen 1 und 10 Sekunden.

Bei den Beschichtungsmitteln gemäß :

β) Siliciumorganischen Polymerisaten handelt es sich um die aus dem Stand der Technik bekannten siliciumorganischen Verbindungen, wie Alkyltrialkoxysilane, Dialkyldialkoxysilane, Tetraalkoxysilane und die einschlägig verwendeten, aromatisch substituierten Silane sowie die einschlägig verwendeten funktionell substituierten siliciumorganischen Verbindungen. Genannt seien z. B. die Verdindungen der Formel III

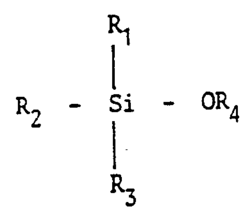

(III)

worin $R_1$, $R_2$ und $R_3$ unabhängig voneinander für einen Rest $—(O)_nR_5$ stehen, wobei $R_4$ und $R_5$ einen Alkylrest mit 1 bis 5 Kohlenstoffatomen oder einen Vinylrest, Allylrest oder Phenylrest, vorzugsweise einen Methyl- oder einen Ethylrest und n Null oder eins bedeuten, oder worin $R_4$ und/oder $R_5$ für einen Rest H $[NH—(CH_2)_m]_p—NH(CH_2)_{m'}$-stehen, wobei m und m' für eine Zahl von 1-6, und p für null oder eins steht oder worin $R_4$ und/oder $R_5$ für einen Rest

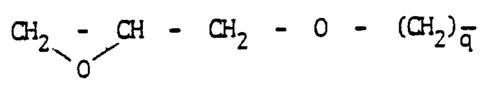

stehen,

worin q für eine Zahl von 1 bis 6 steht oder $R_4$ und/oder $R_5$ für einen Rest

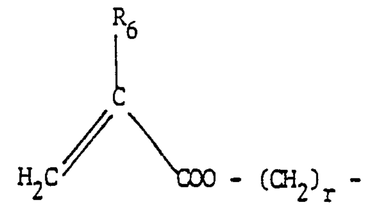

steht,

worin $R_6$ Wasserstoff

oder Methyl und r eine Zahl von 1 bis 6 bedeutet.

Vorzugsweise hat bei wenigstens einem der Reste $R_1$, $R_2$ oder $R_3$ das Bezugszeichen n die Bedeutung Null.

Die wasserhaltigen Beschichtungsmittel werden vorzugsweise dargestellt, indem man die siliciumorganischen Verbindungen, insbesondere die Verbindungen der Formel I mit einer zur Hydrolyse ausreichenden Menge Wasser, d. h. ≥ 0,5 Mol Wasser pro Mol der zur Hydrolyse vorgesehenen Gruppen, wie z. B. Alkoxygruppen hydrolysiert, vorzugsweise unter Säurekatalyse. Als Säuren können z. B. anorganische Säuren, wie Salzsäure, Schwefelsäure, Phosphorsäure, Salpetersäure usw., oder organische Säuren, wie Carbonsäuren, organische Sulfonsäuren usw., oder saure Ionenaustauscher zugesetzt werden, wobei der pH der Hydrolysereaktion in der Regel zwischen 2 und 4, 5, vorzugsweise bei 3 liegt.

Im allgeinen zeigt sich nach dem Zusammengeben der Reaktionspartner ein Temperaturanstieg. In gewissen Fällen kann es notwendig werden, zum Anspringen der Reaktion von außen Wärme zuzuführen, beispielsweise durch Erwärmen des Ansatzes auf 40-50 °C. Zweckmäßigerweise wird darauf geachtet, daß die Reaktionstemperatur 53 °C nicht überschreitet. Die Reaktionsdauer ist in der Regel relativ kurz, sie liegt im allgemeinen unter einer Stunde, beispielsweise bei 45 min. Zur weiteren Bearbeitung kann zweckmäßigerweise ein Teil des Wasser-Alkoholgemisches und der flüchtigen Säuren im Vakuum abgezogen werden. Anschließend kann mit geeigneten organischen Lösungsmitteln, wie z. B. Alkoholen, wie Ethanol, Methanol, Isopropanol, Butanol, Ethern, wie Diethylether, Dioxan, Ethern und Estern von Polyolen, wie z. B. Ethylenglykol. Propylenglykol sowie Ether-Estern dieser Verbindungen, Kohlenwasserstoffen, z. B. aromatischen Kohlenwasserstoffen, Ketonen, wie Aceton, Methylethylketon, der Feststoffgehalt auf ca. 15-35 Gew.-% eingestellt werden. Besonders bevorzugt ist als Lösungsmittel Propanol-2.

Es hat sich ferner als vorteilhaft erwiesen, den Mitteln solche Lösungsmittel zuzusetzen die normalerweise den als Substrat der Beschichtung vorgesehenen Kunststoff anlösen. Im Falle von Polymethylmethacrylat (PMMA) als Substrat empfiehlt sich beispielsweise ein Zusatz von Lösungsmitteln, wie Toluol, Aceton, Tetrahydrofuran in Mengen, die 2 bis 20 %, bezogen auf das Gesamtgewicht der Mittel, ausmachen. Der Wassergehalt der erfindungsgemäßen Mittel wird im allgemeinen auf 5-20 Gew.-%, vorzugsweise auf 13 ± 2 Gew.-%, bezogen auf das Gesamtgewicht der Mittel, eingestellt.

Der pH-Wert der erfindungsgemäßen wasserhaltigen Beschichtungsmittel sollte im Bereich von 3-6 liegen, bevorzugt zwischen 4,5 und 5,5. Es hat sich erwiesen, daß innerhalb dieses Bereichs die Kondensation während der Lagerung besonders gering ist. Die Einstellung des pH-Bereichs kann in an sich bekannter Weise, beispielsweise durch Zugabe geeigneter Basen, wie Alkali-, Erdalkali- oder Ammoniumhydroxid, gegebenenfalls in alkoholischer Lösung oder entsprechender Salze schwacher Säuren, wie der Carbonate, Acetate vorgenommen werden. Es bieten sich insbesondere Puffersysteme innerhalb des genannten pH-Bereichs, wie beispielsweise eine Pufferlösung aus Essigsäure/Kaliumhydroxid, an. Besonders vorteilhaft ist eine Ausführungsform, bei der höhere Carbonsäuren, insbesondere Carbonsäuren mit 8 bis 12 Kohlenstoffatomen in Anteilen von 0,01 bis 1 Mol Säure pro Mol der hydrolysierbaren siliciumorganischen Verbindungen, wie der Verbindungen der Formel I in dem Beschichtungsmittel enhalten sind.

Vorteilhafterweise werden den erfindungsgemäßen Beschichtungsmitteln Härtungskatalysatoren, beispielsweise in Form von Zinkverbindungen und/oder anderer Metallverbindungen, wie Kobalt-, Kupfer- oder Calciumverbindungen, insbesondere deren Octoate oder Naphthenate, zugesetzt. Der Anteil der Härtungskatalysatoren beträgt in der Regel 0,1-2,5 Gew.-%, speziell 0,2-2 Gew.-%, bezogen auf das gesamte Beschichtungsmittel. Besonders genannt seien beispielsweise Zinknaphthenat, -octoat, -acetat, -sulfat usw.

Besonders bevorzugt ist die Anwendung von Beschichtungsmitteln gemäß β) in Form der in der US-PS-4 455 403 angegebenen Formulierungen. Das US-Patent betrifft Beschichtungsmittel mit verbesserter Lagerstabilität, hergestellt durch Kondensation partiell hydrolysierter siliciumorganischer Verbindungen in Gegenwart von Säuren, wobei die Beschichtungsmittel nichtcyclische Alkancarbonsäuren mit 6 bis 21 Kohlenstoffatomen im Molekül, speziell mit 8 Kohlenstoffatomen enthalten.

Falls der Zusatz der höheren Carbonsäuren gemäß der oben angegebenen Definition nicht bereits zum Zweck der Hydrolyse der Silane geschehen war, setzt man dem Beschichtungsmittel vor der Lagerung eine oder mehrere höhere Carbonsäuren in solchen Mengen zu, daß 0,05-0,2 Mol der höheren Carbonsäure, vorzugsweise 0,1-0,15 Mol auf ein Mol eingesetztes Silan kommen. Weiter kann vorteilhaft von der Lehre der EU-OS 82 106 445,8 (insbesondere in Kombination mit der Lehre der US-PS 4 455 403)

Gebrauch gemacht werden. Dabei werden den Beschichtungsmitteln auf Silikonharzbasis Amide der Formel II

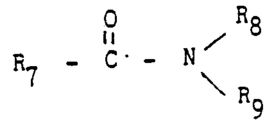

(II)

zugesetzt, wobei in Formel II $R_7$ Wasserstoff, einen gegebenenfalls verzweigten Alkylrest mit 1 bis 22 Kohlenstoffatomen, insbesondere $C_1$-bis $C_6$- und $C_{12}$-bis $C_{18}$-Alkylreste, speziell die geradkettigen Alkylreste oder einen gegebenenfalls substituierten Phenylrest oder einen Alkoxyrest $—OR_{10}$, worin $R_{10}$ für einen Alkylrest mit 1 bis 18 Kohlenstoffatomen oder für einen gegebenenfalls substituierten Phenyl- oder Naphthylrest steht oder einen Rest $—N_8'R_9'$, worin $R_8'$ und $R_9'$ die gleichen Bedeutungen wie $R_8$ und $R_9$ besitzen können, aber davon unabhängig sind und worin $R_8$ und $R_9$ unabhängig voneinander für Wasserstoff oder einen Alkylrest mit 1 bis 4 Kohlenstoffatomen stehen, bedeuten, oder worin $R_8$ und $R_9$ oder $R_7$ und $R_9$ zusammen mit dem Stickstoff einen, gegebenenfalls weitere Stickstoff- oder Sauerstoffatome im Ring tragenden, fünf-, sechs- oder sieben-gliedrigen Heterocyclus bilden bzw. Mischungen derselben enthalten.

Als Substituenten am Phenylrest kommen insbesondere Nitro-, Alkyl-, Alkoxy-, Hydroxy-, Amino-, Sulfonsäure, Halogen, oder weitere Phenylreste in Frage, wobei die Kohlenstoffzahl der Substituenten allgemein $C_{22}$ nicht überschreitet. Die Aminogruppen können- ihrerseits -substituiert, insbesondere alkyliert sein.

Besonders bevorzugt sind die Verbindungen der allgemeinen Formel II, worin $R_7$ für Wasserstoff, Methyl, Ethyl, Propyl, Butyl, Pentyl oder Hexyl inklusive der Isomeren, vorzugsweise der geradkettigen Verbindungen steht, und worin $R_8$ und $R_9$ für Wasserstoff, Methyl oder Ethyl stehen, sowie die Verbindungen, worin $R_7$ einen Rest — OR bedeutet und R für Ethyl und $R_8$ und $R_9$ für Wasserstoff, einen Methyl- oder einen Ethylrest stehen.

Besonders genannt seien Formamid, Dimethylformamid, Acetamid, Dimethylacetamid, Propionamid, speziell Acematid, Propionamid und n-Butyramid sowie Carbamidsäureethylester und N-Ethylcarbamidsäureethylester. Ferner können als Amide Methylformamid, Diethylformamid, i-Butyramid, Pivalinsäureamid, Stearinsäureamid u. a. mit Vorteil verwendet werden. Weiter seien die Morpholinide, Piperidide der erfindungsgemäß umfaßten Reste $R_7$ CO— genannt.

Der Gehalt der gemäß der EU-OS zuzusetzenden Amide der Formel II beträgt 1-20 Gew.-%, bezogen auf das gesamte Beschichtungsmittel, vorzugsweise 3-10 Gew.-%, speziell 5 ± 1 Gew.-%. Der Wassergehalt der Beschichtungsmittel liegt in der Regel bei 5-20 Gew.-%, bezogen auf das gesamte Beschichtungsmittel, insbesondere 10-15 Gew.-%, speziell 13 ± 2 Gew.-%. Die Amide der Formel II können den Beschichtungsmitteln bereits bei der Herstellung der Kondensationsprodukte aus partiell hydrolysierten, siliciumorganischen Verbindungen oder vorzugsweise den Mitteln, welche die Kondensationsharze bereits in einer Trägerphase enthalten, zugesetzt werden. Der Zusatz kann in der an sich üblichen Weise, vorzugsweise durch Einrühren, gegebenenfalls zusammen mit anderen Lösungsmitteln, vorgenommen werden.

Die so erhaltenen Beschichtungsmittel besitzen bei hervorragender Lagerungsfähigkeit besonders gute Härtungscharakteristiken. Sie lassen sich z. B. in relativ kurzer Zeit, beispielsweise innerhalb 4 bis 6 Stunden, in der Regel innerhalb ca. 5 Stunden und bei vergleichsweise niedriger Temperatur, beispielsweise bei 90-110 °C, vorzugsweise bei ca. 100 °C zu hervorragend kratz- und haftfesten Beschichtungen aushärten. Durch das erfindungsgemäße Verfahren wird den damit beschichteten Substraten zusätzlich Antireflexwirkung verliehen.

Bei den Beschichtungen gemäß :

γ) — Melaminharzen handelt es sich um die bekannten Kondensationsharze aufgebaut aus -Melamin-Aldehydpolymeren in löslicher Form sowie deren alkylierte Derivate (vgl. Ullmanns Enzyklopädie der Technischen Chemie. 3. Aufl., Bd. 7, pg 403-424, Verlag Chemie, Weinheim ; Kirk-Othmer 3rd Ed. Vol. 2, pg 440-469, J. Wiley (1978).

Insbesondere seien die härtbaren Formaldehyd-Kondensationsprodukte auf der Basis von Melamin und die durch Veretherung der Methylolverbindungen mit Alkoholen bzw. Polyolen entstandenen Ether verstanden.

Im allgemeinen finden die relativ niedermolekularen Vorkondensate mit einer relativen Molmasse zwischen 500 und 17 000, vorzugsweise 600 bis 14 000 Anwendung.

Die Veretherung geschieht in bekannter Weise bevorzugt bei erhöhter Temperatur in Anwesenheit von Säuren, wobei die Mono-bis-hexaalkylether der Alkohole $C_1$ bis $C_4$ relativ leicht herstellbar sind, die Einführung höherer Alkohole jedoch vorwiegend über Umetherung bewirkt wird. Wichtig sind auch teilveretherte Produkte.

Genannt seien insbesondere die Hexakis ($C_1$-$C_6$-alkoxymethyl)-melamine sowie die Benzylether,

insbesondere die Methyl-, n-Butoxy- und die i-Butoxyether. Von Interesse ist auch die Modifikation mit Caprylalkohol. Als Lösungsmittel für die Melaminverbindungen können z. B. Alkohole wie die dem Ether entsprechenden Ethylenglykole. Ethylcellosolve, ferner Toluol, Xylol, gegebenenfalls Gemische verwendet werden, wobei noch geringe Anteile von Wasser vorhanden sein können. Der Feststoffgehalt liegt in der Regel im Bereich 10 bis 80 Gew.-%, vorzugsweise 60 ± 20 Gew.-%.

Als Umsetzungsprodukte der Melamin-Kondensationspolymerisate mit Polyolen, können z. B. die mit Glykol, Glycerin, 1,4-Butandiol, Trimethylolpropan, Pentaerythrit, Polyethylenglykolen, Polyesterpolyolen, insbesondere den aliphatischen verwendet werden. Nach der Herstellung bzw. der Alkylierung kann durch Entfernung der Flüssiganteile aufkonzentriert und zur Verbesserung der Topfzeiten ein pH-Wert 7-10 eingestellt werden.

Als Stabilisatoren bzw. Modifikatoren können die an sich üblichen angewendet werden, insbesondere Amine, z. B. Alkanolamine wie 2-Amino-2-methyl-1-propanol oder Dimethylaminoethanol, Triethylamin u. ä., ferner Furfurol, Polyamine und Zucker in Mengen unter 10 Gew.-%. Ferner können die Melaminharze noch mit anderen als Komponente zur Kratzfestbeschichtung geeigneten Polymerisaten kombiniert zur Anwendung kommen, z. B. mit Polyurethanen oder Silikonharzen gemäß β) oder Acrylharzen gemäß α).

Die thermische Härtung der Beschichtung erfolgt gewöhnlich im Temperaturbereich 60-185 °C, vorzugsweise im Bereich 110-175 °C während 0,5 bis 45 Minuten. (Vgl. G. Widmer, in H. Mark et al., Encyclopedia of Polymer Science & Technology 2, Inter Science pg 47 ff.).

Als Härtungskatalysatoren können wie üblich Säuren, z. B. organische Säuren wie Essigsäure, Propionsäure, p-Toluolsulfonsäure und deren Anhydrid in den dafür üblichen Mengen, im allgemeinen unter 10 Gew.-%, bezogen auf die Melaminkomponente, angewendet werden.

Die praktische Durchführung des Verfahrens kann nach den gleichen Prinzipien erfolgen, im wesentlichen unabhängig von der chemischen Natur des Beschichtungsmittels.

Einbringen des Siliciumdioxids in das Beschichtungsmittel

Das erfindungsgemäß zu verwendende Siliciumdioxid in Form der amorphen, porösen Kieselsäure wird in dem (flüssigen) Beschichtungsmittel gemäß den Merkmalen α) -γ) in der Regel auf mechanische Weise gleichmäßig verteilt.

Die Verteilung kann beispielsweise durch einfaches Verteilen mittels eines Rührers geschehen.

Vorteilhafterweise kann zunächst aus dem Beschichtungsmittel durch Zusatz des Siliciumdioxids eine Paste hergestellt werden. Die Paste kann dann zum Zwecke des Auftrags auf das Substrat in geeigneter Weise verdünnt werden, beispielsweise durch Zugabe eines geeigneten inerten Lösungsmittels. Im Falle der Beschichtungsmittel vom Typ β) (Siliciumorganische Polymerisate) kann z. B. mit geeigneten Alkanolen, insbesondere einem Gemisch von Alkanolen, beispielsweise einem Gemisch von n-Butanol, i-Propanol und n-Hexanol verdünnt werden. Durch Eintragen der genannten Paste in das durch Lösungsmittelzusatz verdünnte Beschichtungsmittel unter Rühren, beispielsweise mit einem einfachen Rührgerät, kann man spritzfähige Lacke erhalten.

Beschichtung mit den Beschichtungsmitteln gemäß den Merkmalen α) bis γ) eignet sich für feste Kunststoffoberflächen, wie glasartige Substrate, insbesondere für Polymerkunststoffe auf Acrylharzbasis, wie Polymethylmethacrylat und seiner verschiedenen Modifikationen, ABS, Polycarbonat, Polyester, Polyamid, Melaminformaldehydharze, Polystyrol, Polyvinylchlorid, Polyolefine wie Polyäthylen, Polypropylen, Polytetrafluoräthylen, Allyldiglykolcarbonat, Celluloseacetat. Die Härtung der Beschichtung gemäß Merkmal α) geschieht im allgemeinen durch Anwendung energiereicher Strahlung, insbesondere durch Anwendung von UV-Strahlung. Die Strahlung der marktüblichen UV-Lampen ist ausreichend, eine starke Strahlung bei 370 nm ist erwünscht. Geeignet sind Quecksilberhochdrucklampen wie z. B. Prime Arc Ink Lamps.

Das zweckmäßige Gewicht der Beschichtung hängt innerhalb gewisser Grenzen von dem zu beschichtenden Substrat und dem Beschichtungsmittel ab. Im allgemeinen beträgt das Beschichtungsgewicht, ausgedrückt als Feststoffgewicht, 2 bis 6 g/m². Die Schichtdicken liegen in der Regel bei 1 bis 40 μ. Zweckmäßig wird darauf geachtet, daß im konkreten Fall mindestens 40 %, vorzugsweise mindestens 50 % der Siliciumdioxid-Primärteilchen einen mittleren Durchmesser besitzen, der um mindestens 10 %, vorzugsweise mindestens 15 %, größer ist als die Schichtdicke des Beschichtungsmittels.

Beschichtung der Substrate

Die Beschichtung der Substrate kann z. B. durch Tauchen und kontrolliertes Aus-der-Lösung-ziehen der zu beschichtenden Oberflächen geschehen.

Das Herausziehen kann z. B. mit einer Geschwindigkeit von 10 bis 40 cm/min erfolgen. Besonders geeignet ist auch der Sprüh-(Spritz-) auftrag. Weiter sind Beschichtungsverfahren wie Strömungs- oder Wirbelschichtauftrag anwendbar. Die derart beschichteten Substrate werden in geeigneter Weise gehärtet. Bei den Beschichtungsmitteln gemäß Merkmal β) geschieht das vorzugsweise durch Tempern bei erhöhter Temperatur, im allgemeinen bei 80-100 °C während 2 bis 6 Stunden, vorzugsweise während ca. 5 Stunden im Trockenofen.

Bei den Beschichtungsmitteln gemäß Merkmal γ) geschieht die Härtung ebenfalls durch Tempern bei

erhöhter Temperatur im Temperaturbereich 60-185 °C, vorzugsweise im Bereich 110 bis 175 °C während 0,5 bis 45 Minuten.

Die folgenden Beispiele dienen zur Erläuterung der Erfindung. Die verwendeten Prozentangaben beziehen sich — soweit nicht anders angegeben — auf Gewichtsprozent.

Die Bestimmung der Antireflexwirkung

kann gemäß ASTM-D 1003 vorgenommen werden.

Bei den erfindungsgemäß hergestellten antireflexbeschichteten Kunststoffsubstraten werden nach vorliegenden Ergebnissen $T_D$-Werte im Bereich 2-7 % und $T_2$-Werte im Bereich 92-95 %, vorzugsweise 94-95 %, erhalten ($T_2$ = Transmissionsgrad, $T_D$ = Trübung)

Wie bereits ausgeführt, liegt die Schichtdicke der Beschichtung zwischen 1 und 40 µm.

Die Stampfdichte der verwendeten Kieselsäure nach DIN 53194 liegt im Bereich 250 ± 100 g/l. Die Bestimmung der BET-(= Brunauer/Emmet/Teller) Oberfläche geschieht nach Meffert und Langenfeld, Z. Anal. Chem., 238, 187-µ93 (1968).

## Beispiel 1

UV-härtende Acrylharz-Beschichtung

In einem UV-härtbaren Lack, bestehend aus 75 % Trimethylolpropantriacrylat, 20 % Pentaerythrittetraacrylat und 5 % Härter (Benzildemethylketal) werden unter intensivem Rühren 0,3 % amorphe Kieselsäure mit Porenvolumen 1,8 ml/g, mittlerer Teilchengröße 3 µm, und einer BET-Oberfläche von 400 $m^2/g$ (z. B. Syloid ED 30[R], Produkt der Grace Chemicals) suspendiert. Zwei Glasplatten (200 × 200 mm) werden mit Hilfe eines Rakels mit diesem Lack beschichtet und mit einer Quecksilber-Hochdruck-Lampe im Abstand von 10 cm und während 5 sec. UV-gehärtet. In einer aus diesen Glasplatten gebauten Kammer wird dann in bekannter Weise Methylmethacrylat polymerisiert und anschließend bei 115 °C 2 h getempert. Nach Abkühlung lässen sich die Platten problemlos entfernen. Das zurückbleibende PMMA ist jetzt mit einer kratzfesten gut haftenden, nur schwach reflektierenden Beschichtung versehen.

Analog Beispiel 1 werden Beschichtungen mit UV-härtenden Lacken unter Verwendung der folgenden Monomeren und Benzildimethylketal (ergänzt auf 100 Gew.-%) hergestellt :

### Beispiel 1.1

Glycerintriacrylat 40 Gew.-%, Pentaerythrittetraacrylat 55 Gew.-%.

### Beispiel 1.2

Glycerintriacrylat 36 Gew.-%, Trimethylolpropantriacrylat 60 Gew.-%.

### Beispiel 1.3

Ditrimethylolpropantetraacrylat 55 Gew.-%, Glykoldimethacrylat 40 Gew.-%.

### Beispiel 1.4

Diglycerintetraacrylat 70 Gew.-%, Glycerintriacrylat 27 Gew.-%.

### Beispiel 1.5

Dipentaerythrithexaacrylat 40 Gew.-%, Trimethylolethantriacrylat 40 Gew.-%, Cyclohexylmethacrylat 15 Gew.-%.

### Beispiel 1.6

Pentaerythrittetramethacrylat 60 Gew.-%, Ditrimethylolethantetraacrylat 25 Gew.-%, Butylmethacrylat 10 Gew.-%.

## Beispiel 2

Batch-Herstellung einer Siliciumdioxid-Dispersion

In 100 g Lösungsmittelgemisch (1-Hexanol, 1-Butanol, 2-Propanol 2 : 1 : 1) werden 20 g amorphe Kieselsäure mit Porenvolumen 1,6 ml/g, mittlere Teilchengröße 2 µm, und einer BET-Oberfläche von 400 $m^2/g$ (z. B. Syloid 244[R], Produkt der Grace Chemicals) mittels eines Dissolvers dispergiert.

Beispiel 3

3.1 Herstellung des Silikonharzlacks

1 000 g Methyltriethoxysilan werden mit 454 g $H_2O$ und 50 g Eisessig hydrolysiert. Die Temperatur wird dabei unter 50 °C gehalten. Nach 3/4 h zieht man im Vakuum 865 g Ethanol/-Wasser-Gemisch ab, verdünnt den Rückstand mit 555 g i-Propylalkohol und 57 g Toluol. Als Härtungskatalysator werden 6,3 g Zinkoctoat zugegeben.

Zur Einstellung des pH-Wertes werden 25 g 3,5 %ige methanolische KOH-Lösung und 75,0 g Propionamid zugesetzt. Anschließend wird der Wassergehalt auf 13 % eingestellt.

3.2 Herstellung eines Silikonharzlackes aus Ethyltriethoxysilan

1 078 g Ethyltriethoxysilan werden mit 454 g $H_2O$ und 50 g Eisessig hydrolysiert. Die Temperatur wird dabei unter 50 °C gehalten. Nach 3/4 h zieht man im Vakuum 865 g Ethanol/Wasser-Gemisch ab, verdünnt den Rückstand mit 555 g i-Propylalkohol und 57 g Toluol. Als Härtungskatalysator werden 6,3 g Zinkoctoat zugegeben. Zur Einstellung des pH-Wertes werden 25 g 3,5 %ige methanolische KOH-Lösung und 75 g Propionamid zugesetzt. Anschließend wird der Wassergehalt auf 13 % eingestellt.

3.3 Herstellung eines Silikonharzlackes auf Methyltriethoxysilan und Tetraethoxysilan

960 g Methyltriethoxysilan und 40 g Tetraethoxysilan werden mit 454 g $H_2O$ und 50 g Eisessig hydrolisiert. Die Temperatur wird dabei unter 50 °C gehalten. Nach 3/4 h zieht man im Vakuum 873 g Ethanol/Wasser-Gemisch ab, verdünnt den Rückstand mit 560 g i-Propylalkohol und 57 g Toluol. Als Härtungskatalysator werden 6,3 g Zinkoctoat zugegeben.

Zur Einstellung des pH-Wertes werden 25 g 3,5 %ige methanolische KOH-Lösung und 75 g Propionamid zugesetzt.

Anschließend wird der Wassergehalt auf 13 % eingestellt.

Beispiel 4

4.1 Batch-Herstellung

In 100 g des oben in Beispiel 3 beschriebenen Lacks werden mittels eines Dissolvers 25 g amorpher Kieselsäure (wie in Beispiel 1) dispergiert.

4.2 Antireflex-Silikonharzlack

Der oben unter Beispiel 3 beschriebene Lack wird verdünnt mit
33 % 1-Hexanol
17 % 1-Butanol
17 % 2-Propanol
und anschließend werden 1,5 % des unter 4.1 beschriebenen Batch-Ansatzes innerhalb von 15 min eingerührt.

Der erhaltene Lack wird mit einer Spritzpistole auf vorgereinigte PMMA-Platten gebracht. Nach 10-minütigem Trocknen an der Luft wird die Beschichtung 4 h bei 110 °C ausgehärtet.

Die erhaltenen Beschichtungen zeigen eine ausgezeichnete Antireflexwirkung, haften gut auf dem Substrat und sind kratzfest.

4.3 Antireflex-Silikonharzlack

Der oben unter Beispiel 3 beschriebene Silikonharzlack wird verdünnt mit
16,5 % bzw. 20,0 % 1-Hexanol
8,5 % bzw. 10,0 % 1-Butanol
8,5 % bzw. 10,0 % 2-Propanol
und anschließend werden 0,1-1,6 % des vorstehend unter Beispiel 2 beschriebenen Batch-Ansatzes innerhalb von 15 min eingerührt.

Die nach dem Spritzverfahren erhaltenen Beschichtungen zeigen ausgezeichnete Antireflex-Wirkung. Die Bestimmung der Antireflex-Wirkung kann nach ASTM-D 1003 vorgenommen werden. Man erhält die Werte : $T_d$ = 2,2-6,8, $T_2$ = 93,5.

Beispiel 5

5.1 Batch-Herstellung

In 100 g eines Melaminharzes (75 Gew.-% im Lösungsmittelgemisch aus 12 % $CH_3OH$, 24 % Toluol, 53 % n-Butanol, 9 % Glykol, 0,5 % Ethylenglykolacetat, 1,5 % $H_2O$ (in Vol.-%), beispielsweise das Produkt RR 2540 der Bayer AG.) werden mit Hilfe eines Dissolvers *) 16 g amorphe Kieselsäure wie in Beispiel 1 dispergiert.

5.2 Antireflex-Melaminharzlack

In eine Melaminharzlösung (wie oben beschrieben), versetzt mit 1,5 Gew.-% Härter (Toluolsulfonsäureanhydrid) werden innerhalb 30 min 0,8 % des unter 5.1 beschriebenen Batch-Ansatzes eingearbeitet. Der erhaltene Lack wird mit einer Spritzpistole auf vorgereinigte Polycarbonat-Platten gebracht. Nach ca. 20 Minuten Trockenzeit bei 125 °C werden gut haftende, kratzfeste Beschichtungen mit ausgezeichneten Antireflex-Eigenschaften erhalten.

Die Bestimmung der Brechungszahl (Brechungsindex) wird nach DIN 53491 vorgenommen. Die Brechungszahl weicht in allen Beispielen um mehr als 0,01 Einheiten vom Wert 1,45 ab.

*) vgl. Ullmann's Encyklopädie d. Techn. Chemie, 4. Auflage, Bd. 2, Seite 287-288, Verlag Chemie

**Patentansprüche**

1. Verfahren zur Beschichtung von Kunststoffen als Substraten mit Beschichtungsmitteln mit Kratzfest- und Antireflexwirkung unter Verwendung von Kratzfestbeschichtungsmitteln und Siliciumdioxid, dadurch gekennzeichnet, daß

a) Die Beschichtungsmittel ausgewählt sind aus der Gruppe mit einer Brechungszahl, die um mindestens 0,01 Einheiten vom Wert 1,45 abweicht, bestehend aus

α) Acrylat- und Methacrylatpolymeren, mit gegebenenfalls einem Gehalt an Silicium-organischen Polymerisaten

β) Silicium-organischen Polymerisaten

γ) Melaminharzen

b) die Beschichtungsmittel einen Gehalt an Siliciumdioxid zwischen 0,1 und 10 Gew.-% besitzen,

c) das Siliciumdioxid eine amorphe, poröse Kieselsäure mit großem Porenvolumen, bestehend aus Primärteilchen mit einem mittleren Durchmesser im Bereich von 1 bis 50 μ, einem Porenvolumen von 0,1 bis 5 ml/g und einer Stampfdichte (nach DIN 53 194) im Bereich 120-350 g/l darstellt,

d) die Beschichtung der Substrate mit einer Schichtdicke der Beschichtungsmittel im Bereich von 1 bis 40 μ durchgeführt wird.

2. Verfahren gemäß Anspruch 1, dadurch gekennzeichnet, daß die Primärteilchen einen mittleren Durchmesser im Bereich von 1 bis 20 μ besitzen.

3. Verfahren gemäß Anspruch 1, dadurch gekennzeichnet, daß das Siliciumdioxid eine spezifische Oberfläche im Bereich 300 bis 900 $m^2/g$ besitzt.

4. Verfahren gemäß den Ansprüchen 1 bis 3, dadurch gekennzeichnet, daß mindestens 40 % der Siliciumdioxid-Primärteilchen einen mittleren Durchmesser besitzen, der um wenigstens 10 % größer ist als die Schichtdicke des Beschichtungsmittels.

**Claims**

1. Process for coating plastics substrates with coating agents having scratch-resistant and antireflex properties using scratch-resistant coating agents and silicon dioxide, characterised in that

a) the coating agents are selected from the group having a refractive index differing from the value 1.45 by at least 0.01 units, consisting of

α) acrylate and methacrylate polymers, optionally containing organosilicon polymers

β) organosilicon polymers

γ) melamine resins

b) the coating agents contain between 0.1 and 10 % by weight of silicon dioxide,

c) the silicon dioxide is an amorphous, porous silicic acid with a large pore volume, consisting of primary particles with an average diameter in the range from 1 to 50 microns, a pore volume of 0.1 to 5 ml/g and a compacted density (according to DIN 53194) in the range from 120-350 g/l,

d) the substrates are coated with the coating agents in a layer thickness in the range from 1 to 40 microns.

2. Process as claimed in claim 1, characterised in that the primary particles have an average diameter in the range from 1 to 20 microns.

3. Process as claimed in claim 1, characterised in that the silicon dioxide has a specific surface area in the range from 300 to 900 $m^2/g$.

4. Process as claimed in claims 1 to 3, characterised in that at least 40 % of the primary particles of

silicon dioxide have an average diameter which is at least 10 % greater than the layer thickness of the coating agent.

**Revendications**

1. Procédé pour l'enduction de substrats de matières plastiques avec des matières d'enduction produisant un effet de résistance à la rayure et antireflet, avec utilisation de matières d'enduction résistantes à la rayure et de bioxyde de silicium, caractérisé en ce que

a) les matières d'enduction sont choisies dans le groupe qui, avec un indice de réfraction s'écartant d'au moins 0,01 unité de la valeur 1,45, est constitué par

α) des polymères d'acrylate et de méthacrylate contenant éventuellement des polymères organosiliciés,

β) des polymères organosiliciés,

γ) des résines de mélamine,

b) les matières d'enduction ont une teneur en dioxyde de silicium comprise entre 0,1 et 10 % en poids,

c) le dioxyde de silicium est un acide silicique amorphe poreux à gros volume de pores, se composant de particules primaires d'un diamètre moyen dans la gamme de 1 à 50 µm, ayant un volume de pores de 0,1 à 5 ml/g et une masse volumique après damage (selon DIN 53 194) dans la gamme 120-350 g/l,

d) l'enduction des substrats est effectuée avec une épaisseur de couche des matières d'enduction dans la gamme de 1 à 40 µm.

2. Procédé selon la revendication 1, caractérisé en ce que les particules primaires ont un diamètre moyen dans la gamme de 1 à 20 µm.

3. Procédé selon la revendication 1, caractérisé en ce que le dioxyde de silicium a une surface spécifique dans la gamme de 300 à 900 $m^2/g$.

4. Procédé selon l'une quelconque des revendications 1 à 3, caractérisé en ce qu'au moins 40 % des particules primaires de dioxyde de silicium ont un diamètre moyen qui est supérieur d'au moins 10 % à l'épaisseur de couche de la matière d'enduction.